# EUROPÄISCHE PATENTANMELDUNG

(11) **EP 1 936 232 A2**
(43) Veröffentlichungstag der Anmeldung: **25.06.2008**
(21) Anmeldenummer: 07022648.5
(22) Anmeldetag: 22.11.2007
(51) Int. Cl.: F16F 15/123

(54) **Drehschwingungsdämpfer**

(30) Priorität: 18.12.2006 DE 102006059668
(71) Anmelder: LuK Lamellen und Kupplungsbau Beteiligungs KG, 77815 Bühl (DE)
(72) Erfinder: Lehmann, Steffen, 76275 Ettlingen (DE); Pidoux, Amelie, 67850 Herrlisheim (FR); Hartmann, Thorsten , Dr., 77876 Kappelrodeck (DE); Weller, Uwe, 76229 Karlsruhe (DE)

(57) **Zusammenfassung**

Die Erfindung betrifft einen Drehschwingungsdämpfer, insbesondere ein geteiltes Schwungrad, mit einem Eingangsteil und einem Ausgangsteil, das gegen den Widerstand mindestens einer Energiespeichereinrichtung und ab einem definierten Verdrehwinkel zusätzlich gegen den Widerstand mindestens einer relativ zu der Energiespeichereinrichtung schwimmenden Anschlagfedereinrichtung gegenüber dem Eingangsteil verdrehbar ist.

Die Erfindung zeichnet sich dadurch aus, dass die Anschlagfedereinrichtung zwei miteinander gekoppelte Endstücke umfasst, die relativ zueinander und voneinander weg begrenzt verlagerbar sind.

## Beschreibung

Die Erfindung betrifft einen Drehschwingungsdämpfer, insbesondere ein geteiltes Schwungrad oder eine Kupplungsscheibe, mit einem Eingangsteil und einem Ausgangsteil, das gegen den Widerstand mindestens einer Energiespeichereinrichtung und ab einem definierten Verdrehwinkel zusätzlich gegen den Widerstand mindestens einer relativ zu der Energiespeichereinrichtung schwimmenden Anschlagfedereinrichtung gegenüber dem Eingangsteil verdrehbar ist.

Aus den japanischen Veröffentlichungen JP 2000-205295 A, JP 2000-205296 A und JP 2006-077884 A sind verschiedene Ausführungen von Gummi- beziehungsweise Elastomerfedem bekannt, die schwimmend in einer Stahl-Außenfedereinrichtung angeordnet sind. Die bekannten Torsionsschwingungsdämpfer haben den Nachteil, dass sie eine relativ geringe Federkapazität aufweisen. Darüber hinaus kann unter bestimmten Umständen ein starkes Setzen auftreten.

Aufgabe der Erfindung ist es, einen Drehschwingungsdämpfer gemäß dem Oberbegriff des Anspruchs 1 zu schaffen, der einfach aufgebaut und kostengünstig herstellbar ist. Insbesondere soll der erfindungsgemäße Drehschwingungsdämpfer eine Hauptdämpferkennlinie aufweisen, die nach Erreichen eines maximalen Motormoments steil ansteigt, um ein eventuell auftretendes Übermoment abzudecken.

Die Aufgabe ist bei einem Drehschwingungsdämpfer, insbesondere einem geteilten Schwungrad oder einer Kupplungsscheibe, mit einem Eingangsteil und einem Ausgangsteil, das gegen den Widerstand mindestens einer Energiespeichereinrichtung und ab einem definierten Verdrehwinkel zusätzlich gegen den Widerstand mindestens einer relativ zu der Energiespeichereinrichtung schwimmenden Anschlagfedereinrichtung gegenüber dem Eingangsteil verdrehbar ist, dadurch gelöst, dass die Anschlagfedereinrichtung zwei miteinander gekoppelte Endstücke umfasst, die relativ zueinander und voneinander weg begrenzt verlagerbar sind. Der Drehschwingungsdämpfer wird auch als Torsionsschwingungsdämpfer bezeichnet. Durch die erfindungsgemäße Kopplung der beiden Endstücke miteinander wird auf einfache Art und Weise ermöglicht, eine Federeinrichtung zwischen den Endstücken anzuordnen beziehungsweise einzuspannen. Dadurch kann auf einfache Art und Weise eine ausreichende Federkapazität bereitgestellt werden.

Ein bevorzugtes Ausführungsbeispiel des Drehschwingungsdämpfers ist dadurch gekennzeichnet, dass zwischen den Endstücken eine Druckfedereinrichtung angeordnet, insbesondere eingespannt, ist. Durch die Druckfedereinrichtung kann ein unerwünschtes Setzen der Federwirkung deutlich reduziert werden.

Ein weiteres bevorzugtes Ausführungsbeispiel des Drehschwingungsdämpfers ist dadurch gekennzeichnet, dass die Druckfedereinrichtung mindestens eine Schraubendruckfeder umfasst. Die Schraubendruckfeder ist vorzugsweise aus Federstahl gebildet.

Ein weiteres bevorzugtes Ausführungsbeispiel des Drehschwingungsdämpfers ist dadurch gekennzeichnet, dass die Endstücke durch mindestens eine Schnappverbindung miteinander gekoppelt sind. Die Schnappverbindung vereinfacht den Zusammenbau der Anschlagfedereinrichtung erheblich.

Ein weiteres bevorzugtes Ausführungsbeispiel des Drehschwingungsdämpfers ist dadurch gekennzeichnet, dass von den Endstücken jeweils mindestens zwei Schnapphaken ausgehen, die jeweils mindestens eine Führungsausnehmung für ein Positionierelement aufweisen, das an einem Schnapphaken des jeweils anderen Endstücks vorgesehen ist. Die Schnapphaken und die Führungsausnehmungen sind so ausgeführt, dass sie zum Führen und/oder zum Zentrieren der beiden Endstücke relativ zueinander dienen.

Ein weiteres bevorzugtes Ausführungsbeispiel des Drehschwingungsdämpfers ist dadurch gekennzeichnet, dass die Endstücke im Wesentlichen jeweils die Gestalt eines Kreiszylinders aufweisen. Von den einander zugewandten Stirnseiten der Endstücke erstrecken sich die Schnapphaken in axialer Richtung aufeinander zu.

Ein weiteres bevorzugtes Ausführungsbeispiel des Drehschwingungsdämpfers ist dadurch gekennzeichnet, dass die Energiespeichereinrichtung mindestens eine Schraubendruckfeder umfasst. Die Schraubendruckfeder ist vorzugsweise aus Federstahl gebildet.

Ein weiteres bevorzugtes Ausführungsbeispiel des Drehschwingungsdämpfers ist dadurch gekennzeichnet, dass der Außendurchmesser der Endstücke etwas kleiner als der Innendurchmesser der Energiespeichereinrichtung, insbesondere der Schraubendruckfeder, ist. Durch das Spiel wird eine Bewegung der Endstücke relativ zu der Energiespeichereinrichtung ermöglicht.

Ein weiteres bevorzugtes Ausführungsbeispiel des Drehschwingungsdämpfers ist dadurch gekennzeichnet, dass der Außendurchmesser der Endstücke etwas größer als der Innendurchmesser der Energiespeichereinrichtung, insbesondere der Schraubendruckfeder, ist. Durch das Übermaß kann einerseits Reibung erzeugt werden. Andererseits wird durch das Übermaß ermöglicht, die Anschlagfedereinrichtung, zum Beispiel beim Auswuchten, zu positionieren.

Ein weiteres bevorzugtes Ausführungsbeispiel des Drehschwingungsdämpfers ist dadurch gekennzeichnet, dass die Endstücke gleich ausgeführt sind. Dadurch wird die Herstellung vereinfacht.

Ein weiteres bevorzugtes Ausführungsbeispiel des Drehschwingungsdämpfers ist dadurch gekennzeichnet, dass die Endstücke an ihren voneinander abgewandten Stirnseiten ballig ausgebildet sind. Vorzugsweise sind die Endstücke im Längsschnitt konvex nach außen gekrümmt. Dadurch wird die Anlage an Mitnehmerelementen des Drehschwingungsdämpfers verbessert.

Ein weiteres bevorzugtes Ausführungsbeispiel des Drehschwingungsdämpfers ist dadurch gekennzeichnet, dass die Mantelflächen der Endstücke ballig ausgebildet sind. Vorzugsweise sind die Endstücke an den Mantelflächen im Längsschnitt konvex nach außen gekrümmt. Dadurch können die Endstücke besser an die Deformation der Energiespeichereinrichtung angepasst werden.

Ein weiteres bevorzugtes Ausführungsbeispiel des Drehschwingungsdämpfers ist dadurch gekennzeichnet, dass die Endstücke an ihrem äußeren Umfang Aussparungen aufweisen. Einige Aussparungen dienen dazu, die Anschlagfedereinrichtung, insbesondere bei der Vormontage, zu positionieren. Diese Aussparungen werden auch als Positionieraussparungen bezeichnet. Andere Aussparungen dienen zur Sicherstellung möglichst konstanter Wanddicken. Dadurch wird die Herstellung der Endstücke im Spritzgießverfahren vereinfacht.

Ein weiteres bevorzugtes Ausführungsbeispiel des Drehschwingungsdämpfers ist dadurch gekennzeichnet, dass die Endstücke aus einem vorzugsweise faserverstärkten Kunststoffmaterial gebildet sind. Bei dem Kunststoffmaterial handelt es sich vorzugsweise um ein thermoplastisches Kunststoffmaterial. Vorzugsweise sind dem Kunststoffmaterial Trockenschmierstoffe beigemischt. Darüber hinaus kann das Kunststoffmaterial vorteilhaft elastisch federnd ausgeführt sein.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:
- Figur 1: die Kennlinie eines erfindungsgemäßen Drehschwingungsdämpfers in einem kartesischen Koordinatendiagramm;
- Figur 2: einen Ausschnitt eines erfindungsgemäßen Drehschwingungsdämpfers mit einer Anschlagfedereinrichtung im Schnitt;
- Figur 3: eine perspektivische Darstellung der Anschlagfedereinrichtung aus Figur 1;
- Figur 4: eine Explosionsdarstellung der Anschlagfedereinrichtung aus Figur 3;
- Figur 5: die Anschlagfedereinrichtung aus den Figuren 3 und 4 im Längsschnitt;
- Figur 6: einen vergrößerten Ausschnitt aus Figur 5;
- Figur 7: eine perspektivische Darstellung eines Endstücks der Anschlagfedereinrichtung aus den Figuren 3 bis 6;
- Figur 8: eine Seitenansicht des Endstücks aus Figur 7;
- Figur 9: eine Vorderansicht des Endstücks aus Figur 7 und
- Figur 10: die Ansicht eines Schnitts entlang der Linie X-X in Figur 9.

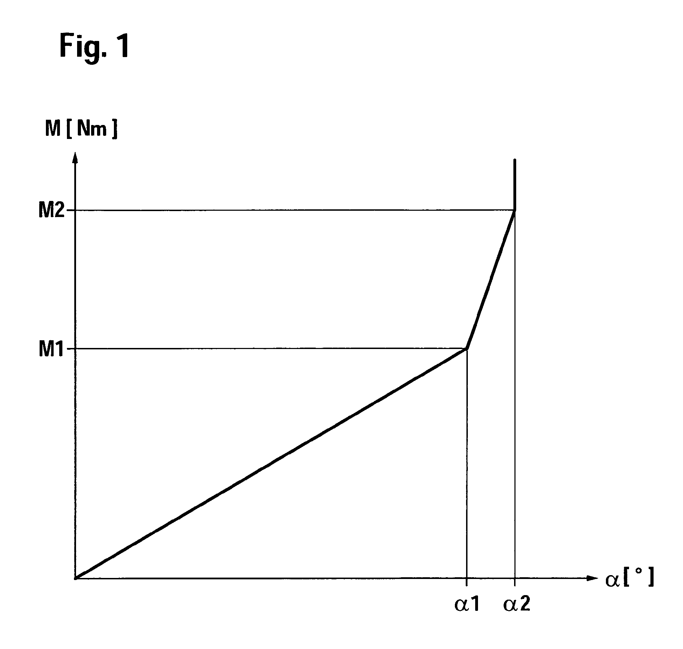

Figur 1 zeigt ein kartesisches Koordinatendiagramm, in dem das Drehmoment M in Newtonmeter über dem Verdrehwinkel alpha in Grad eines erfindungsgemäßen Drehschwingungsdämpfers in Form einer Kennlinie dargestellt ist, die auch als Hauptdämpferkennlinie bezeichnet wird. Die Kennlinie steigt vom Koordinatenursprung linear an, bis ein Moment M1 erreicht ist, das dem maximalen Motormoment entspricht. Der zugehörige Verdrehwinkel ist α1. In einem Winkelbereich zwischen α1 und α2 steigt die Kennlinie steil an, um ein Übermoment abzudecken, das mit M2 bezeichnet ist. Gemäß einem wesentlichen Aspekt der Erfindung wird ein Drehschwingungsdämpfer geschaffen, mit dem auf einfache Art und Weise die in Figur 1 dargestellte Kennlinie realisiert werden kann. Dabei werden die bekannten Nachteile von Gummi-/Elastomerfedern und bisherigen Stahlfedervarianten kompensiert.

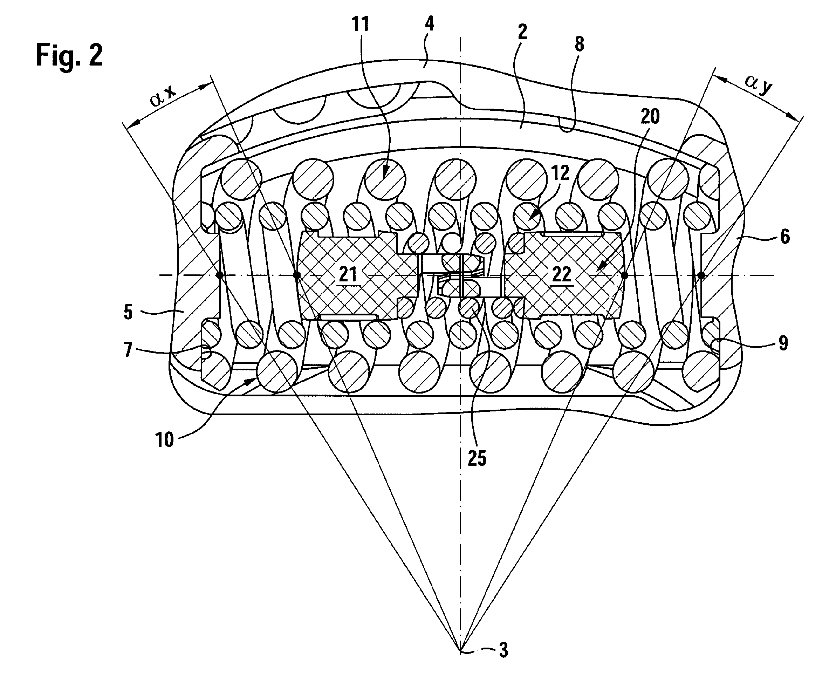

In Figur 2 ist ein Ausschnitt eines erfindungsgemäßen Drehschwingungsdämpfers, der auch als Torsionsschwingungsdämpfer bezeichnet wird, im Schnitt dargestellt. Der Drehschwingungsdämpfer umfasst ein Eingangsteil 2, das um eine Drehachse 3 relativ zu einem Ausgangsteil 4 drehbar ist. An dem Ausgangsteil 4 sind zwei gegenüberliegende Mitnehmerelemente 5, 6 ausgebildet, die auch als Mitnehmernasen bezeichnet werden. Die Mitnehmernasen 5, 6 ragen in ein Fenster 8, das in dem Ausgangsteil 4 ausgespart ist. Radial außerhalb der Mitnehmerelemente 5, 6 ist jeweils ein im Wesentlichen kreisringscheibenförmiger Anlagenbereich 7, 9 vorgesehen. Zwischen den Anlagebereichen 7, 9 ist in dem Fenster 8 des Ausgangsteils 4 eine Energiespeichereinrichtung 10 eingespannt, die eine Außenfeder 11 und eine Innenfeder 12 umfasst. Die Außenfeder 11 und die Innenfeder 12 sind als Schraubendruckfedern ausgeführt. Die Innenfeder 12 erstreckt sich im Inneren der Außenfeder 11 aber radial außerhalb der Mitnehmerelemente 5, 6.

Die Innenfeder 12 der Energiespeichereinrichtung 10 begrenzt in ihrem Inneren einen im Wesentlichen kreiszylinderförmigen Innenraum, in dem eine Anschlagfedereinrichtung 20 angeordnet ist. Die Anschlagfedereinrichtung 20 umfasst zwei Endstücke 21, 22. Das Endstück 21 ist in einem definierten Abstand zu dem Mitnehmerelement 5 angeordnet. Der zugehörige Verdrehwinkel um die Drehachse 3 ist mit ax bezeichnet. Das Endstück 22 ist in einem definierten Abstand zu dem Mitnehmerelement 6 angeordnet. Der zugehörige Verdrehwinkel ist mit αy bezeichnet. Der in Figur 1 dem maximalen Motormoment M1 zugeordnete Verdrehwinkel α1 ergibt sich aus der Summe der Verdrehwinkel αx und αy. Die beiden Endstücke 21, 22 sind durch eine Schnappverbindung so miteinander gekoppelt, dass sich die beiden Endstücke 21, 22 begrenzt aufeinander zu und voneinander weg bewegen können. Zwischen den beiden Endstücken 21 und 22 ist eine Druckfedereinrichtung 25 angeordnet, vorzugsweise eingespannt. Durch die Vorspannkraft der Druckfedereinrichtung 25 werden die beiden Endstücke 21, 22 in einem definierten Abstand zueinander gehalten.

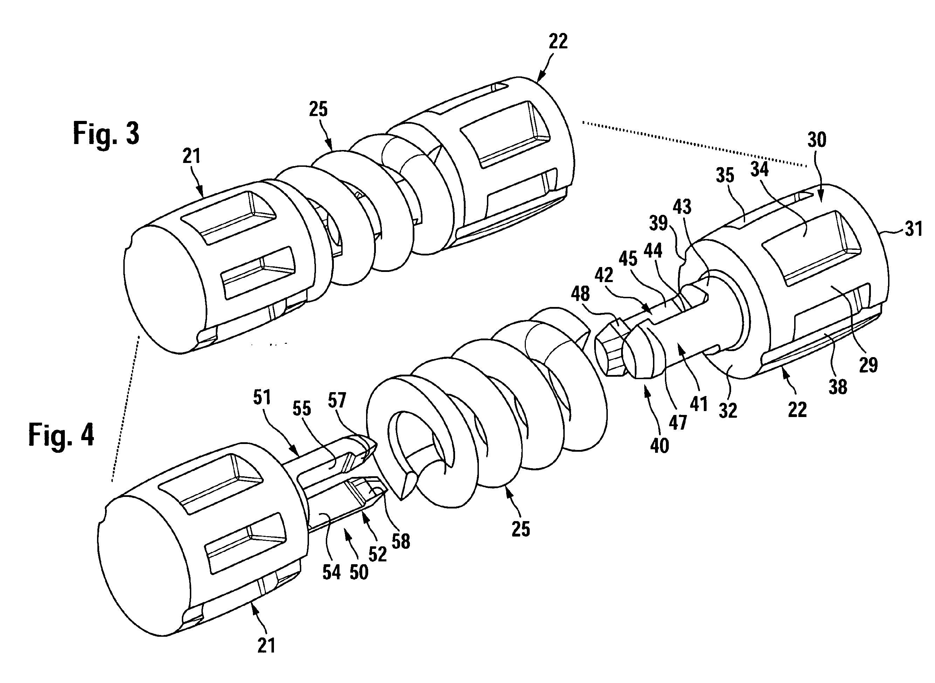

In den Figuren 3 bis 6 ist die Anschlagfedereinrichtung 20 in verschiedenen Ansichten dargestellt. Die beiden Endstücke 21 und 22 sind identisch ausgeführt. Daher wird im Folgenden nur die Gestalt des Endstücks 22 ausführlich beschrieben. Das Endstück 22 umfasst einen im Wesentlichen kreiszylinderförmigen Grundkörper 30 mit einer Mantelfläche 29 und zwei Stirnseiten 31, 32. In der Mantelfläche 29 sind mehrere Aussparungen 34, 35 vorgesehen, die sich im Wesentlichen quaderförmig in Grundkörper 30 erstrecken. Die Aussparungen 34, 35 dienen der Sicherstellung möglichst konstanter Wanddicken und somit der spritztechnischen Optimierung, ohne jedoch die Steifigkeit zu sehr zu reduzieren. Darüber hinaus weist der Grundkörper 30 des Endstücks 22 Aussparungen 38, 39 auf, die von Längsnuten mit einem kreisbogenförmigen Querschnitt gebildet werden. Die Aussparungen 38, 39 dienen dazu, das zugehörige Endstück 22 bei der Vormontage zu positionieren.

Von der Stirnseite 32 des Endstücks 22 erstrecken sich zwei Schnapphaken 41, 42 in, bezogen auf den Grundkörper 30, axialer Richtung. Die beiden Schnapphaken 41, 42 sind über einen gemeinsamen Fuß 43 einstückig mit dem Grundkörper 30 verbunden. Der Schnapphaken 41 weist eine Führungsausnehmung 44 mit einer Führungsfläche auf, die senkrecht zu einer Führungsfläche einer Führungsausnehmung 45 angeordnet ist, die an dem Schnapphaken 42 vorgesehen ist. An den freien Enden der Schnapphaken 41, 42 ist jeweils ein Positionierelement 47, 48 vorgesehen. Die Positionierelemente 47, 48 sind einstückig mit dem gemeinsamen Fuß 43 verbunden. Die Schnapphaken 41, 42 mit den Führungsausnehmungen 44, 45 und den Positionierelementen 47, 48 werden auch als Schnappverbindungselement 40 bezeichnet.

An dem Endstück 21 ist ein Schnappverbindungselement 50 ausgebildet, das identisch zu dem Schnappverbindungselement 40 des Endstücks 22 ist. Das Schnappverbindungselement 50 umfasst zwei Schnapphaken 51, 52 mit Führungsausnehmungen 54, 55 und Positionierelementen 57, 58.

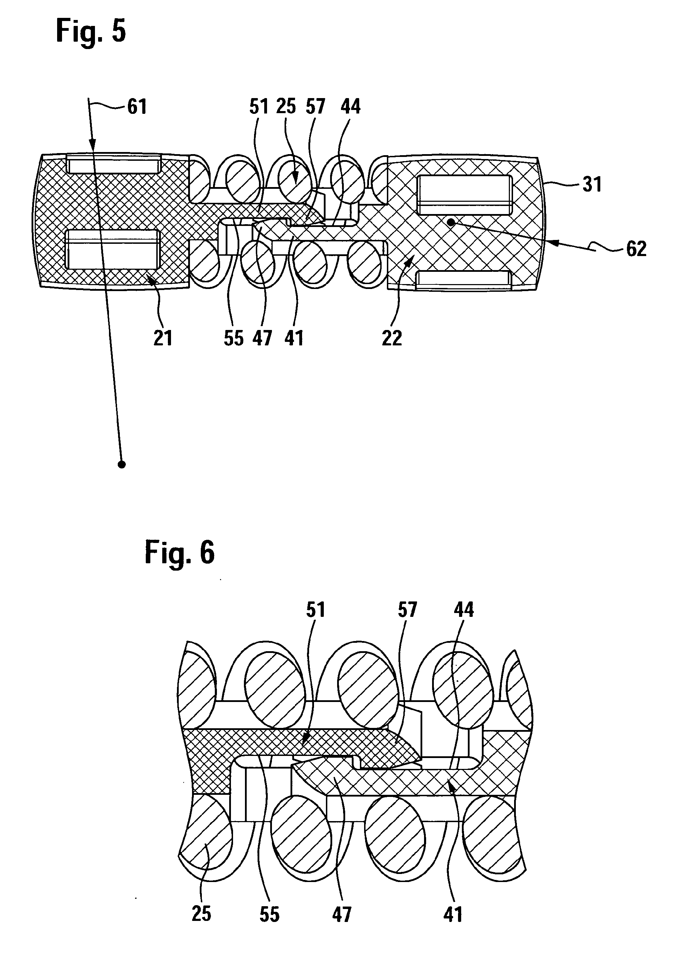

In Figur 5 sieht man, dass das Positionierelement 57 des Schnapphakens 51 so in die Führungsausnehmung 44 des Schnapphakens 41 eingreift, dass sich die beiden Endstücke 21 in axialer Richtung relativ zueinander bewegen können. Die Bewegung wird durch die Länge der Führungsausnehmung 44 begrenzt. Gleichzeitig greift das Positionierelement 47 des Schnapphakens 41 in die Führungsausnehmung 55 des Schnapphakens 51 ein. Radial außen liegen die Schnapphaken 41, 51 an der Druckfedereinrichtung 25 an. Die Druckfedereinrichtung 25 ist als Schraubendruckfeder ausgeführt. Der Außendurchmesser der Schraubendruckfeder 25 entspricht etwa dem Außendurchmesser der Grundkörper der Endstücke 21 und 22. An dem Innendurchmesser der Schraubendruckfeder 25 liegen die Schnapphaken 41, 51 an. Dadurch wird ein unerwünschtes Lösen der Schnappverbindung verhindert. Gleichzeitig wird durch die Elastizität der Schraubendruckfeder 25 das Zusammenfügen der Endstücke 21 und 22 ermöglicht.

Die Mantelfläche des Endstücks 21 ist ballig ausgeführt. Der zugehörige Radius ist mit 61 bezeichnet. Die Stirnseite 31 des Endstücks 22 ist ebenfalls ballig ausgeführt. Der zugehörige Radius ist mit 62 bezeichnet. Die Radien 61, 62 dienen sowohl der besseren Anlage an dem Mitnehmerelementen des Drehschwingungsdämpfers als auch dem besseren Anpassen an die Deformation des Stahl-Druckfederpakets. Gemäß einem wesentlichen Aspekt der Erfindung haben die Schnapphaken zusätzlich eine Führungsfunktion. Somit ist sowohl ein sicherer Zusammenhalt der Endstücke 21, 22 und der Druckfedereinrichtung 25 als auch eine gewisse Winkelelastizität gewährleistet.

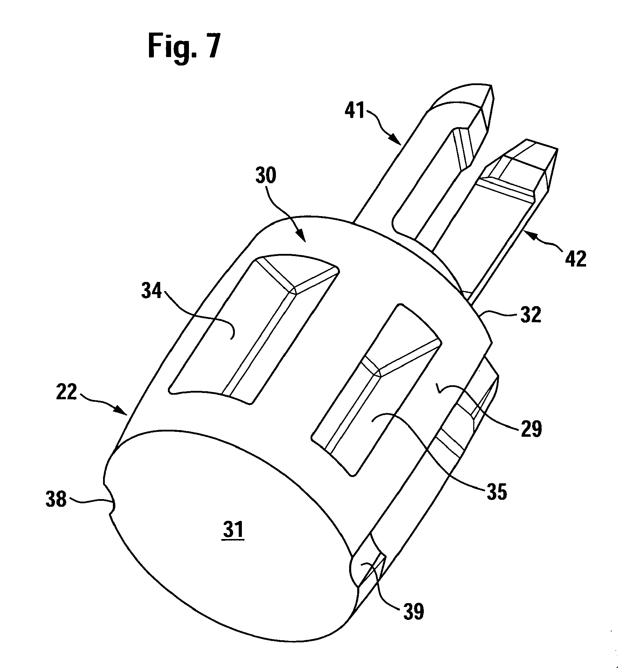

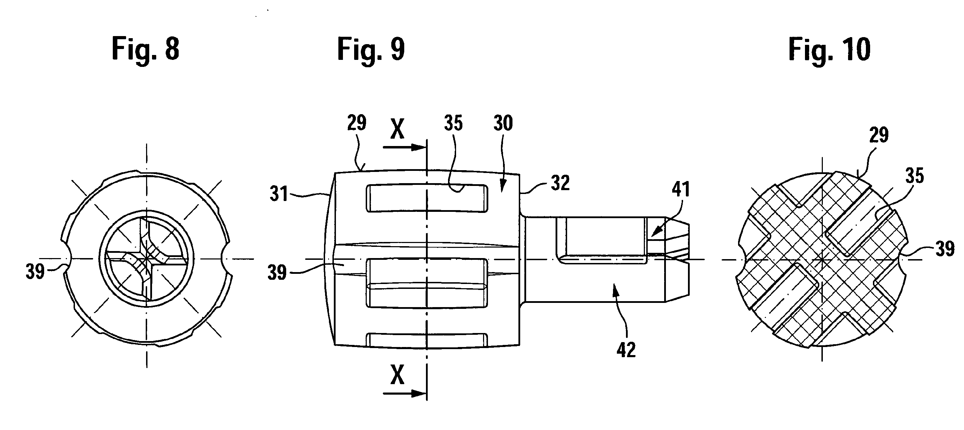

In den Figuren 7 bis 10 ist das Endstück 22 allein in verschiedenen Ansichten dargestellt. Die Schnapphaken 41, 42 dienen sowohl zum Zentrieren als auch zum Verclipsen der Endstücke. Das Endstück 22 ist aus einem faserverstärkten und mit Trockenschmierstoffen vermischten thermoplastischen Kunststoff hergestellt. Der Außendurchmesser des Grundkörpers 30 des Endstücks 22 ist so gestaltet, dass ein gewisses Übermaß zwischen dem Endstück 22 und der Innenfeder (12 in Figur 1) der Energiespeichereinrichtung existiert. Dieses Übermaß kann sowohl zur zusätzlichen Reibungserzeugung als auch zur Positionierung für einen Wuchtvorgang genutzt werden.

### Bezugszeichenliste

- 2.: Eingangsteil
- 3.: Drehachse
- 4.: Ausgangsteil
- 5.: Mitnehmernase
- 6.: Mitnehmernase
- 7.: Anlagebereich
- 8.: Fenster
- 9.: Anlagebereich
- 10.: Energiespeichereinrichtung
- 11.: Außenfeder
- 12.: Innenfeder
- 20.: Anschlagfedereinrichtung
- 21.: Endstück
- 22.: Endstück
- 25.: Druckfedereinrichtung
- 29.: Mantelfläche
- 30.: Grundkörper
- 31.: Stirnseite
- 32.: Stirnseite
- 34.: Aussparung
- 35.: Aussparung
- 38.: Aussparung
- 39.: Aussparung
- 40.: Schnappverbindungselement
- 41.: Schnapphaken
- 42.: Schnapphaken
- 43.: Fuß
- 44.: Führungsausnehmung
- 45.: Führungsausnehmung
- 47.: Positionierelement
- 48.: Positionierelement
- 50.: Schnappverbindungselement
- 51.: Schnapphaken
- 52.: Schnapphaken
- 54.: Führungsausnehmung
- 55.: Führungsausnehmung
- 57.: Positionierelement
- 58.: Positionierelement
- 61.: Radius
- 62.: Radius

## Patentansprüche

1. Drehschwingungsdämpfer, insbesondere geteiltes Schwungrad oder Kupplungsscheibe, mit einem Eingangsteil (2) und einem Ausgangsteil (4), das gegen den Widerstand mindestens einer Energiespeichereinrichtung (10) und ab einem definierten Verdrehwinkel (α1) zusätzlich gegen den Widerstand mindestens einer relativ zu der Energiespeichereinrichtung (10) schwimmenden Anschlagfedereinrichtung (20) gegenüber dem Eingangsteil (2) verdrehbar ist, **dadurch gekennzeichnet, dass** die Anschlagfedereinrichtung (20) zwei miteinander gekoppelte Endstücke (21,22) umfasst, die relativ zueinander und voneinander weg begrenzt verlagerbar sind.

2. Drehschwingungsdämpfer nach Anspruch 1, **dadurch gekennzeichnet, dass** zwischen den Endstücken (21,22) eine Druckfedereinrichtung (25) angeordnet, insbesondere eingespannt, ist.

3. Drehschwingungsdämpfer nach dem vorhergehenden Anspruch, **dadurch gekennzeichnet, dass** die Druckfedereinrichtung (25) mindestens eine Schraubendruckfeder umfasst.

4. Drehschwingungsdämpfer nach einem der vorhergehenden Ansprüche, **dadurch gekennzeichnet, dass** die Endstücke (21,22) durch mindestens eine Schnappverbindung miteinander gekoppelt sind.

5. Drehschwingungsdämpfer nach Anspruch 4, **dadurch gekennzeichnet, dass** von den Endstücken (21,22) jeweils mindestens zwei Schnapphaken (51,52;41,42) ausgehen, die jeweils mindestens eine Führungsausnehmung (55,54;44,45) für ein Positionierelement (57,58;47,48) aufweisen, das an einem Schnapphaken des jeweils anderen Endstücks vorgesehen ist.

6. Drehschwingungsdämpfer nach einem der vorhergehenden Ansprüche, **dadurch gekennzeichnet, dass** die Endstücke (21,22) im Wesentlichen jeweils die Gestalt eines Kreiszylinders aufweisen.

7. Drehschwingungsdämpfer nach einem der vorhergehenden Ansprüche, **dadurch gekennzeichnet, dass** die Energiespeichereinrichtung (10) mindestens eine Schraubendruckfeder (11,12) umfasst.

8. Drehschwingungsdämpfer nach einem der vorhergehenden Ansprüche, **dadurch gekennzeichnet, dass** der Außendurchmesser der Endstücke (21,22) etwas kleiner als der Innendurchmesser der Energiespeichereinrichtung (10), insbesondere der Schraubendruckfeder, ist.

9. Drehschwingungsdämpfer nach einem der Ansprüche 1 bis 7, **dadurch gekennzeichnet, dass** der Außendurchmesser der Endstücke (21,22) etwas größer als der Innendurchmesser der Energiespeichereinrichtung (10), insbesondere der Schraubendruckfeder, ist.

10. Drehschwingungsdämpfer nach einem der vorhergehenden Ansprüche, **dadurch gekennzeichnet, dass** die Endstücke (21,22) gleich ausgeführt sind.

11. Drehschwingungsdämpfer nach einem der vorhergehenden Ansprüche, **dadurch gekennzeichnet, dass** die Endstücke (21,22) an ihren voneinander abgewandten Stirnseiten (31) ballig ausgebildet sind.

12. Drehschwingungsdämpfer nach einem der vorhergehenden Ansprüche, **dadurch gekennzeichnet, dass** die Mantelflächen (29) der Endstücke (21,22) ballig ausgebildet sind.

13. Drehschwingungsdämpfer nach einem der vorhergehenden Ansprüche, **dadurch gekennzeichnet, dass** die Endstücke (21,22) an ihrem äußeren Umfang Aussparungen (34,35;38,39) aufweisen.

14. Drehschwingungsdämpfer nach einem der vorhergehenden Ansprüche, **dadurch gekennzeichnet, dass** die Endstücke (21,22) aus einem vorzugsweise faserverstärkten Kunststoffmaterial gebildet sind.
